# EUROPEAN PATENT APPLICATION

(11) **EP 2 159 030 A1**
(43) Date of publication of application: **03.03.2010**
(21) Application number: 08163008.9
(22) Date of filing: 26.08.2008
(51) Int. Cl.: B29C 44/04

(54) **Injection molding method for producing plastic structural elements for household appliances**

(71) Applicant: Electrolux Home Products Corporation N.V., 1930 Zaventem (BE)
(72) Inventor: Sanita', Massimo, 33170 Pordenone (IT); Bortolotti, Paolo, 33170 Pordenone (IT)
(74) Representative: Baumgartl, Gerhard Willi

(57) **Abstract**

Injection molding method for producing plastic structural elements (2) for household appliances, each being defined by an injection molded monolithic plastic item (2); the injection molding method comprising the step Of mixing to the plastic material to be injected into the mold internal cavity (5) negatively reproducing the shape of the monolithic plastic item (2) to be produced, a given amount of a blowing agent so that the resulting high-viscosity liquid mixture of plastic material entering into said cavity (5) contains a given percentage of said blowing agent; and the strep of injecting into the mold internal cavity (5) a given amount of said high-viscosity liquid mixture of plastic material, having an overall volume slightly lower than the volume of the mold internal cavity (5), so that said given amount of high-viscosity liquid mixture of plastic material can freely expand within said cavity (5) to form, after hardening, a monolith plastic item (2) having a substantially compact outer layer (2a), and a substantially evenly-expanded inner core (2b) whose local density is 10% to 60% lower than that of the outer layer (2a); and the step of extracting, after complete hardening of said given amount of high-viscosity liquid mixture of plastic material injected into the mold internal cavity (5), the resulting monolith plastic item (2) from the mold (3).

## Description

The present invention relates to an injection molding method for producing plastic structural elements for household appliances.

More specifically, the present invention relates to an injection molding method for producing polypropylene-made structural elements for laundry mashing machines, tumble-dryers, dishwashers, refrigerators and similar, to which the following description refers purely by way of example.

As is known, at present many structural elements of the household appliances are defined by injection molded monolithic plastic items made of polypropylene mixed with calcium carbonate and other optional additives and/or pigments.

Sometimes, owing to the particular shape of the plastic structural element to be produced, the injection molding process creates into the item body unevenly distributed sink marks and internal voids which may generate cracks and, thus, premature part failure. Moreover sink marks cause defects on the external surface of the plastic structural element, thus compromising the aesthetical appeal of the plastic element before the user.

Despite the great efforts to eliminate this structural defects, today's injection molding production processes are still hardly able to compensate the natural shrinkage of the plastic material at market reasonable costs, and without incurring in other drawbacks.

In fact, at present all suppliers of plastic structural elements for household appliances avoid sink marks and internal voids on the injection molded monolithic plastic item, via a gradual increase of the holding pressure of the mould pieces until the plastic material begins to solidify inside the mould cavity. Unfortunately, this solution produces permanent structural stresses in the plastic body, and often also unexpected light warps of the plastic item that may cause significant production control problems since this kind of plastic items is generally subjected to strict dimension tolerances.

It is aim of the present invention to provide an injection molding method for producing polypropylene-made structural elements for household appliances, able to eliminate sink marks and internal voids on the plastic body, without drawbacks and at market reasonable costs.

According to the present invention, there is provided an injection molding method for producing plastic structural elements for household appliances, as claimed in Claim 1 and preferably, though not necessarily, in any one of the dependent Claims.

A non-limiting embodiment of the present invention will be described by way of example with reference to the accompanying drawings, in which :
- Figure 1 shows a schematic view of a plastics injection molding machine able to produce plastic structural elements for household appliances according to the teachings of the present invention;
- Figure 2 shows a schematic section view of a plastic structural element for household appliances realized according to the teachings of the present invention.

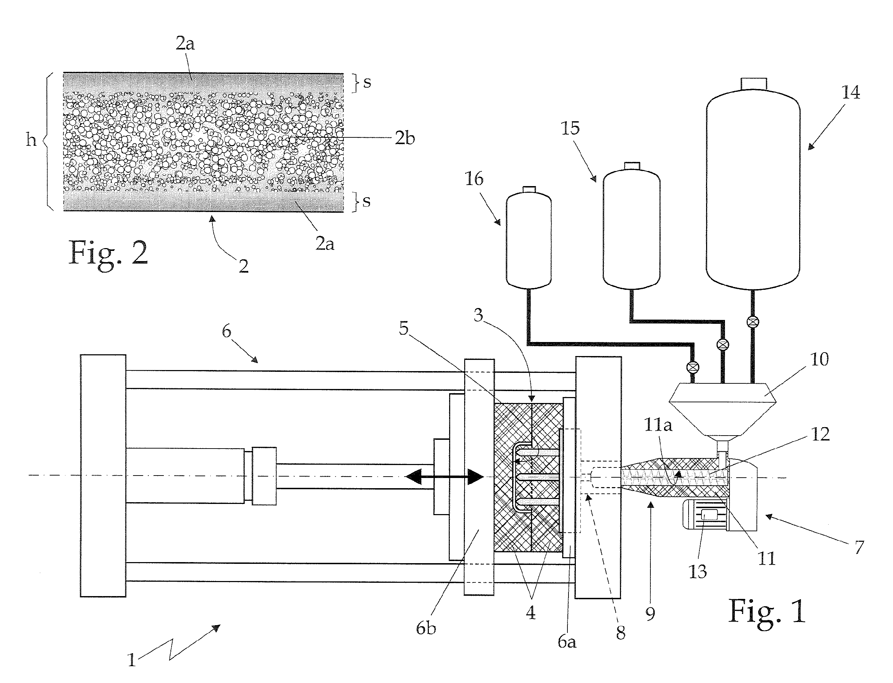

With reference to Figures 1 and 2, number 1 indicates as a whole a plastics injection molding machine able to produce plastic structural elements 2 for household appliances, each of these structural elements 2 being defined by an injection molded monolithic plastic item 2 made of polypropylene or similar plastic material, mixed with a blowing agent and with other optional filler materials and/or additives and/or pigments. Wherein a blowing agent is an instable liquid or powder chemical compound which, in reaching a specific decomposition temperature, is subjected to an extremely fast, exothermic or endothermic decomposition chemical reaction during which the chemical compound produces a great amount of gas.

In particular, injection molding machine 1 is able to produce tubs, drums, drawers, control panels, supporting frames, hoppers, lids, doors, filter casings, handles, detergent dispensers, and similar plastic items 2 for household appliances, made of polypropylene or similar plastic material, mixed with at least one blowing agent and with calcium carbonate or other filler material, such as talcum, kaolin, barium sulfate, silica, glass fibers and/or basalt fibers.

With reference to Figure 1, injection molding machine 1 substantially comprises: a mold 3 consisting of at least two metal shells 4, which are brought into contact with each other and are designed to form, at the centre of the contact surface between the shells, a closed cavity 5 negatively reproducing the shape of the monolithic plastic item 2 to be produced; a press 6 for moving and supporting the two metal shells 4, and designed to bring, on command, the two metal shells 4 into contact with each other to cyclically form cavity 5; and a plastic material feed line 7, which is supplied with a more or less continuous stream of granular plastic material mixed with filler materials and/or additives and/or pigments, and which liquefies said granular plastic material mixed with filler materials and/or additives and/or pigments for feeding the resulting high-viscosity liquid mixture of plastic material in a controlled manner into the cavity 5 formed at the centre of mold 3 when the two metal shells 4 are mated.

More specifically, in the example shown, the two metal shells 4 are fixed, facing each other, to the fixed platen 6a and movable platen 6b of press 6 respectively; and the plastic material feed line 7 comprises a liquid plastic injection device 8, known as a "hot-channel device", which is supplied with a continuous stream of high-viscosity liquid mixture of plastic material, and feeds said high-viscosity liquid mixture in a controlled manner and at a predetermined injection pressure to the cavity 5 formed in the centre of mold 3 when the two metal shells 4 are mated.

In addition to the above, the plastic material feed line 7 also comprises a plasticizing unit 9, which is supplied with a more or less continuous stream of granular plastic material mixed with filler materials and/or additives and/or pigments (such as polypropylene mixed with a filler material and a blowing agent), and which is able to liquefy said granular plastic material/s mixed with filler material/s and/or additive/s and/or pigments, and to feed a continuous stream of the resulting high-viscosity liquid mixture of plastic material directly to the plastic injection device 8 at a predetermined pressure slightly higher than injection pressure.

More specifically, in the example shown plasticizing unit 9 preferably, though not necessarily, comprises a inlet hopper 10, into which the granular plastic material/s, the filler material/s, the additive/s and the pigment/s are poured altogether, and a hollow metal casing 11 in which a cylindrical-shaped plasticizing chamber 11a is formed. A first end of plasticizing chamber 11a is in communication with the bottom of hopper 10 to receive by gravity the granular plastic material/s, filler material/s, additive/s and pigment/s, whereas a second end of plasticizing chamber 11a communicates directly with the input of plastic injection device 8.

Plasticizing unit 9 also comprises a number of electric heating units (not shown) appropriately arranged inside hollow metal casing 11 to Joule-heat and liquefy the granular plastic material/s, the additive/s and the pigment/s fed into the plasticizing chamber 11a; a mixing screw 12 mounted for rotation about its longitudinal axis, inside plasticizing chamber 11a, and designed to break up, mix, and blend the granular plastic material/s, the additive/s and the pigment/s inside the plasticizing chamber 14a to assist melting; and an electric or hydraulic motor assembly 13 which is mechanically connected to mixing screw 12 for rotating the mixing screw 12 about its longitudinal axis.

The electric heating units inside hollow metal casing 11 keep the area of hollow metal casing 11 surrounding plasticizing chamber 11a at a temperature normally ranging between 200°C and 300°C, and at any rate higher than the liquefying temperature of the plastic material/s, so as to liquefy the granular plastic material/s fed into the plasticizing chamber 11a, and then keep the resulting mixture of plastic material/s mixed with filler materials and/or additives and/or pigments into a semisolid or highly viscous liquid state until the transfer to the plastic injection device 8; whereas mixing screw 12 is also designed to push, while rotating about its longitudinal axis, the by now liquid mixture of plastic material to the second end of plasticizing chamber 11a, from where the liquid mixture flows into plastic injection device 8.

Finally injection molding machine 1 comprises one or more first pneumatic conveyors 14, each feeding in a controlled manner a preferably, though not necessarily, continuous stream of a respective granular plastic material (for example polypropylene) into hopper 10; one or more second pneumatic conveyors 15, each feeding in a controlled manner a preferably, though not necessarily, continuous stream of at least one granular or powder blowing agent into hopper 10; and optionally one or more third pneumatic conveyors 16, each feeding in a controlled manner a preferably, though not necessarily, continuous stream of at least one granular or powder filler material (for example calcium carbonate) into hopper 10.

Injection molding machine 1 produces plastic structural elements 2 for household appliances using an injection molding method which comprises firstly the step of mixing, inside plastic material feed line 7, a given amount of a blowing agent and, optionally, a given amount of a filler material to the polypropylene or other similar plastic material to be injected into cavity 5 of mold 3, so that the resulting high-viscosity liquid mixture of plastic material to be fed into cavity 5 by plastic material feed line 7 contains a given percentage of said blowing agent preferably, though not necessarily, ranging between 0,3% and 3% of the mixture weight, and - if present - a given percentage of said filler material preferably, though not necessarily, ranging between 10% and 50% of the mixture weight.

When the high-viscosity liquid mixture of plastic material (i.e. the polypropylene mixed with the blowing agent and the filler material) is ready to be injected into cavity 5, the injection molding method for producing plastic structural elements 2 for household appliances provides for injecting into cavity 5 a given amount of the high-viscosity liquid mixture of plastic material having an overall volume which is slightly lower than the total volume of cavity 5, so that this given amount of the high-viscosity liquid mixture of plastic material can freely expand within cavity 5 to completely fill cavity 5 before hardening.

More specifically, with reference to Figure 2, this given amount of the high-viscosity liquid mixture of plastic material injected into cavity 5, can freely expand within cavity 5 to form, inside cavity 5, a monolith plastic item 2 having a substantially compact outer layer 2a whose total thickness ranges between 10% and 60% of the local thickness h of item 2, and whose local density is almost equal to that of the high-viscosity liquid mixture of plastic material; and a substantially evenly-expanded inner core 2b whose local density is 10% to 60% lower than that of the outer layer 2a.

More specifically, taking into consideration that thickness h of monolith plastic items 2 ranges preferably, though not necessarily, between 2 mm (millimeters) and 9 mm (millimeters), and that in Figure 2 inner core 2b is surrounded by two opposite outer layers 2a, thickness s of each outer layer 2a ranges preferably, though not necessarily, between 0,4 mm (millimeters) and 2 mm (millimeters). In other words, in the example shown the total thickness of item 2 outer layer 2a is equal to the sum of the thicknesses s of the two opposite outer layers 2a.

In view of the above, after complete hardening of the high-viscosity liquid mixture of plastic material within cavity 5, monolith plastic item 2 has an average density which is 2% to 25% lower than that of the high-viscosity liquid mixture of plastic material previously injected into cavity 5, and which ranges between 0,75 g/cm³ (grams per cubic centimeter) and 1,25 g/cm³ (grams per cubic centimeter).

This particular structure of the monolith plastic item 2 is due to the fact that the high-viscosity liquid mixture of plastic material that, after injection into cavity 5, spreads on the internal surface of mould 3 whose temperature is lower than the solidification temperature of the polypropylene or other similar plastic material, immediately solidifies preventing the decomposition chemical reaction of the blowing agent to take place; whereas the high-viscosity liquid mixture of plastic material that, after injection into cavity 5, remains entrapped in the center of cavity 5, starts immediately foaming because of the gas generated by the decomposition of the blowing agent.

In fact, in the center of cavity 5, the decomposition chemical reaction of the blowing agent can freely take place because temperature of the high-viscosity liquid mixture of plastic material is locally higher than the decomposition temperature of the blowing agent, and pressure of the high-viscosity liquid mixture of plastic material is locally lower than that of the gas produced by the decomposition of the blowing agent. Foaming of the high-viscosity liquid mixture of plastic material forming inner core 2b, continues until the temperature of the high-viscosity liquid mixture of plastic material in the center of cavity 5 decreases below the solidification temperature of the polypropylene or other similar plastic material, and the polypropylene or other similar plastic material starts solidifying.

In other words, the injection molding method for producing plastic structural elements 2 for household appliances comprises, in succession, the steps
a) of mixing to the highly viscous liquid polypropylene or similar plastic material to be injected into cavity 5 of mold 3, a given amount of a blowing agent, so that the resulting high-viscosity liquid mixture of plastic material entering into cavity 5 contains a given percentage of said blowing agent ranging preferably, though not necessarily, between 0,3% and 3% of the mixture weight;
b) of injecting into cavity 5 a given amount of said high-viscosity liquid mixture of plastic material having an overall volume which is slightly lower than the volume of cavity 5, so that said given amount of high-viscosity liquid mixture of plastic material can freely expand within cavity 5 to form a monolith plastic item 2 having a substantially compact outer layer 2a whose total thickness ranges preferably, though not necessarily, between 10% and 60% of the local thickness h of item 2, and a substantially evenly-expanded inner core 2b whose local density is 10% to 60% lower than that of outer layer 2a, and so that the average density of the monolith plastic item 2 ranges preferably, though not necessarily, between 0,75 g/cm³ (grams per cubic centimeter) and 1,25 g/cm³ (grams per cubic centimeter); and
c) of extracting, after complete hardening of the given amount of high-viscosity liquid mixture of plastic material injected into cavity 5, the resulting monolith plastic item 2 from mold 3.
   Preferably, though not necessarily, the injection molding method for producing plastic structural elements 2 for household appliances also comprises the step
d) of mixing to the highly viscous liquid polypropylene or similar plastic material to be injected into cavity 5 of mold 3, either before or after the addition of the blowing agent, also a given amount of calcium carbonate or other filler mineral (such as talcum, kaolin, barium sulfate, silica, glass fibers and/or basalt fibers) so that the resulting high-viscosity liquid mixture of plastic material entering into cavity 5 contains a given percentage of said filler material preferably, though not necessarily, ranging between 10% and 50% of the mixture weight.

The blowing agent added to the polypropylene or similar plastic material to be injected into cavity 4, consists preferably, though not necessarily,
in a Nitrogen-based compound, such as the Azodicarbonamide (CAS number 123-77-3) having a decomposition temperature ranging between 205°C and 215°C, and a Gas yielding coefficient equal to approximately 220 millilitres per gram; or
in a Hydrazine-derivate compound, such as the 4-Methylbenzene-sulfonohydrazide (CAS number 344295-58-5) having a decomposition temperature ranging between 105°C and 110°C, and a Gas yielding coefficient equal to approximately 115 millilitres per gram, or the p-Toluenesulfonylsemicarbazide (CAS number 10396-10-18) having a decomposition temperature ranging between 226°C and 235°C, and a Gas yielding coefficient equal to 120-140 millilitres per gram; or
in a Tetrazoles compound, such as the 5-Phenyltetrazoles (1H-Tetrazole, 5-phenyl-) (CAS number 18039-42-4) having a decomposition temperature ranging between 240°C and 250°C, and a Gas yielding coefficient equal to 190-210 millilitres per gram; or
in an endothermic-decomposition-reaction compound, such as the Sodium bi-carbonates (CAS number 144-55-08) having a decomposition temperature ranging between 150°C and 180°C, and a Gas yielding coefficient equal to 185-240 millilitres per gram, or the Citric acid (CAS number 77-92-9) having a decomposition temperature equal to approximately 175°C, and a Gas yielding coefficient equal to 185-240 millilitres per gram, or the Tri Sodium bi-hydrate citrate (1,2,3-Propanetricarboxylic acid, 2-hydroxy-, sodium salt, dihydrate) (CAS number 6132-04-3) having a decomposition temperature equal to approximately 320°C.

The injected plastic material is preferably, though not necessarily, a polypropylene-base material, i.e. a polymer (plastic) material containing propylene units, or another polyolefin plastic material; the polypropylene-base material may be either a homopolymer-polypropylene or a copolymer-polypropylene (for example a block copolymer, or a random copolymer), or a mixture thereof.

The present injection molding method for producing plastic structural elements 2 for household appliances has lots of advantages. Firstly, plastic structural elements 2 for household appliances are no more sensitive to unevenly distributed sink marks and internal voids on their body. In fact, if present, these sink marks and voids are spread out within the inner core 2b of the injection molded monolithic plastic item 2, among thousands of other evenly-distributed voids formed by the bobbles of gas produced during decomposition of the blowing agent, an therefore they are no more starting point for cracks.

Moreover, the injection molding method for producing plastic structural elements 2 for household appliances, as disclosed above, ensures a remarkable reduction of the plastic material amount per item with no significant reduction of the elastic modulus and stiffness of the item, thus allowing a remarkable reduction of the overall production costs. The cost of polypropylene, in fact, is one of the major expenses in production of plastic structural elements 2 for household appliances.

Clearly, changes may be made to the injection molding method for producing plastic structural elements 2 for household appliances, as described and illustrated herein, without, however, departing from the scope of the present invention.

## Claims

1. Injection molding method for producing plastic structural elements (2) for household appliances, each being defined by an injection molded monolithic plastic item (2); the injection molding method being **characterized by** comprising the steps
a) of mixing to the plastic material to be injected into the mold internal cavity (5) negatively reproducing the shape of the monolithic plastic item (2) to be produced, a given amount of a blowing agent so that the resulting high-viscosity liquid mixture of plastic material entering into said cavity (5) contains a given percentage of said blowing agent;
b) of injecting into the mold internal cavity (5) a given amount of said high-viscosity liquid mixture of plastic material, having an overall volume slightly lower than the volume of the mold internal cavity (5), so that said given amount of high-viscosity liquid mixture of plastic material can freely expand within said cavity (5) to form, after hardening, a monolith plastic item (2) having a substantially compact outer layer (2a), and an expanded inner core (2b) whose local density is 10% to 60% lower than that of the outer layer (2a); and
c) of extracting, after hardening of said given amount of high-viscosity liquid mixture of plastic material injected into the mold internal cavity (5), the resulting monolith plastic item (2) from the mold (3).

2. Injection molding method as claimed in Claim 1, wherein the total thickness of the outer layer (2a) of said monolith plastic item (2) ranges between 10% and 60% of the local thickness (h) of the item (2).

3. Injection molding method as claimed in Claim 1 or 2, wherein the average density of said monolith plastic item (2) ranges between 0,75 and 1,25 grams per cubic centimeter.

4. Injection molding method as claimed in any one of the foregoing claims, wherein the high-viscosity liquid mixture of plastic material injected into the mold internal cavity (5) contains a given percentage of said blowing agent ranging between 0,3% and 3%.

5. Injection molding method as claimed in any one of the foregoing claims, **characterized by** also comprising the step of mixing to the plastic material to be injected into the mold internal cavity (5), either before or after the addition of the blowing agent, also a given amount of a filler mineral, so that the resulting high-viscosity liquid mixture of plastic material entering into the mold internal cavity (5) contains a given percentage of said filler material.

6. Injection molding method as claimed in Claim 5, wherein the high-viscosity liquid mixture of plastic material injected into the mold internal cavity (5) contains a given percentage of said filler material ranging between 10% and 50%.

7. Injection molding method as claimed in Claim 4 or 5, wherein said filler material comprises calcium carbonate and/or talcum and/or kaolin and/or barium sulfate and/or silica and/or glass fibers and/or basalt fibers.

8. Injection molding method as claimed in any one of the foregoing claims, wherein the blowing agent is a Nitrogen-based compound, or a Hydrazine-derivate compound, or a Tetrazoles compound.

9. Injection molding method as claimed in any one of the Claims 1-7, wherein the blowing agent is Sodium bi-carbonates, or Citric acid, or Tri Sodium bi-hydrate citrate, or a similar compound having an endothermic decomposition chemical reaction.

10. Injection molding method as claimed in any one of the foregoing claims, wherein the plastic material to be injected into the mold internal cavity (5) is a polyolefin plastic material.

11. Injection molding method as claimed in Claim 10, wherein the plastic material to be injected into the mold internal cavity (5) is a polypropylene-base material, i.e. a polymer (plastic) material containing propylene units.

12. Injection molding method as claimed in Claim 11, wherein the plastic material to be injected into the mold internal cavity (5) is a homopolymer-polypropylene or a copolymer-polypropylene or a mixture thereof.
